# EUROPEAN PATENT APPLICATION

(11) **EP 3 673 742 A1**
(43) Date of publication of application: **01.07.2020**
(21) Application number: 18215947.5
(22) Date of filing: 31.12.2018
(51) Int. Cl.: A23D 7/005, A23D 7/05, A23G 4/02, A23G 4/06, A23G 7/00

(54) **METHOD AND APPARATUS FOR PRODUCING AN EMULSION-BASED FAT POWDER TO MANUFACTURE A FOOD PRODUCT**

(71) Applicant: ETH Zürich, 8092 Zürich (CH)
(72) Inventor: GUILLET, Pascal Jonas, 8002 Zürich (CH); POKORNY, Lea Anais, 8005 Zürich (CH); WINDHAB, Erich Josef, 8261 Hemishofen (CH)
(74) Representative: Schneider Feldmann AG Patent- und Markenanwälte

(57) **Abstract**

The disclosed invention consists of a method and related apparatus (A) for producing an emulsion-based and essentially bubble-free fat powder (17) to manufacture a food product and the related food, pharmaceutical or cosmetic product, comprising the method steps of:
a) providing a dispersible phase and a continuous phase, in particular in the form of high melting fat resp. wax in liquid form; the dispersible phase and / or continuous phase comprising at least one active ingredient;
b) emulsifying a dispersible, water-soluble phase (DP) within a high melting fat resp. wax matrix functioning as continuous phase (CP) in order to receive a water-in-oil/fat emulsion;
c) stabilizing the received water-in-oil/fat emulsion, achieving an emulsion-based fat powder;
while the disclosed invention should provide a method and apparatus for producing an emulsion-based fat powder (17) to manufacture a food, pharmaceutical or cosmetic product, wherein the controlled release and protection of active ingredients in the achieved foods, pharmaceutical respectively cosmetic products is allowed and improved.

## Description

### TECHNICAL FIELD

The present invention relates to a method and apparatus for producing an emulsion-based fat powder. The emulsion-based fat powder is particularly used in food, in particular in chewing gums, and / or cosmetic products and / or pharmaceutical products allowing controlled release and protection of active ingredients, e.g. flavour, in food, pharmaceutical and cosmetic products, wherein disintegration and release of the active ingredients is triggered by mechanical and / or thermal stresses.

### STATE OF THE ART

Flavour encapsulation, in particular for the use in a chewing gum composition, with the aim of a flavour release over a long period of time has been discussed thoroughly in literature. One well-known method used to control the release of flavours in chewing gum is to perform an initial spray-drying step and then coating particle with a water-insoluble substance. This type of encapsulation has the disadvantage that the incorporated flavour concentration is diluted by the coating and that the core of such flavour encapsulation system remains water-soluble. Such controlled release of an active ingredient is usually called as delivery system in the state of the art.

Alternative, well-known flavour encapsulation methods are realized through encapsulation of the flavours in a water-soluble carbohydrate matrix. This type of encapsulation has the disadvantage that the flavour is released very quickly, as carbohydrate based encapsulated flavours rapidly dissolve in the saliva in case of a food product, in particular a chewing gum composition. Furthermore, carbohydrate based encapsulation systems are generally produced by conventional spray drying which is a thermally intense process leading to loss of volatile flavour compounds.

There are several technical fields where (encapsulated) flavours respectively fragrances are incorporated into final products. Regarding food products, the incorporation of flavours into chewing gum compositions is a prominent field, wherein traditionally, flavours are incorporated into the chewing gum composition by either blending lipophilic liquid flavours in the gum matrix or incorporating hydrophilic, encapsulated flavours. Incorporating liquid flavours is not desirable as such flavours are released during consumption of chewing gums very rapidly leading to a pronounced flavour release during the first minute of consumption and as a large fraction of such liquid flavours are irreversibly bound to the chewing gum base substance and are not released during consumption (remain in the chewing gum irreversibly).

Document WO2006/089200 A2 discloses a chewing gum containing a flavour delivery system. The encapsulation of the flavouring agent is realized according to the teaching of WO2006/089200 A2 by providing a core including a first flavoring agent, wherein the core is coated with at least one layer being a hydrophobic layer or a hydrophilic layer. In particular, it has been found according to document WO2006/089200 A2 that by encapsulating a flavoring agent, a chewing gum can be formed that provides a delayed release of the flavoring agent when the chewing gum is chewed by a consumer.

The further document EP 1252828 A2 discloses a coated powder with the aim of a controlled release of a core material such as aroma and flavor, wherein such coated powders are used in foods and drinks. According to EP 01252828 A2, a blend of a lipid which is solid at ordinary temperature with an edible water-soluble additive and / or an edible polymer substance is used as coating agent. The coating may be performed by fluidized bed coating method, centrifugal coating method or contact / collision coating method.

Further documents disclosing a delivery system of an active ingredient are US 2006/263480 A1 respectively US 4,597,970.

The disadvantages of the known state of the art documents can be summarized with regard to food products, in particular chewing gum compositions, as follows:
(i) Chewing gum flavour is not long-lasting and cannot be controlled, i.e. the known flavours and encapsulation techniques for flavours in chewing gum compositions do not allow sufficiently long-lasting and constant release of an active ingredient, in particular flavours.
(ii) Only approximately 30% of flavours contained in chewing gum compositions are released during chewing, while 70% are irreversibly bound to the chewing gum composition and cannot be solved during consumption: This severely impacts the cost of chewing gum products, as contained flavours are a major cost driver in the chewing gum industry.
(iii) Colorant respectively dyes are instable in food products, i.e. colorants degrade during storage and processing.
(iv) Heat-induced release of cooling agent in cosmetic products is not yet possible.

### DESCRIPTION OF THE INVENTION

The object of the present invention is to provide a method and apparatus for producing an emulsion-based fat powder to manufacture a food, pharmaceutical or cosmetic product, wherein the known disadvantages of the state of the art are overcome and in particular, the controlled release and protection of active ingredients in the achieved foods, pharmaceutical respectively cosmetic products is allowed and improved. The object of the present invention is solved by a method and apparatus according to claims 1, 5, 8, 18, 20 resp. 22.

According to the present invention, a water-in-oil/fat emulsion comprising at least one active ingredient in the dispersed and / or continuous phase is stabilized, achieving an emulsion-based fat powder.

Preferably, the achieved emulsion-based fat powder is incorporated into a food product, in particular a chewing gum composition, or a pharmaceutical product or a cosmetic product.

Within the meaning of the present invention and depending on the prospective use, active ingredients are understood as, but not limited to substances such as nicotine, vitamins, drugs, colorants, cooling agent, UV protection agents, et cetera, or any combinations thereof.

It has been found that the current encapsulated flavours are undesirable as they are predominantly water-soluble leading to relatively fast release during consumption of chewing gum upon contact with saliva within the first seconds of consumption and that the subject-matter of the present invention adresses and provides a solution regarding this problem.

Within the meaning of the present invention, a liquid water-soluble phase is emulsified respectively dispersed into a high melting wax matrix functioning as continuous phase, resulting in a delivery system for the active ingredient in the dispersed and / or continuous phase. In other words, the suggested delivery system in particular for a chewing gum is emulsion-based according to the present invention.

Moreover, it has been surprisingly found that the method and apparatus according to the present invention leads to the further advantage allowing to co-encapsulate flavour and / or sweetener and / or acid and / or other active chewing gum compounds such as but not limited to nicotine.

The water-in-oil/fat emulsion may be received by conventional emulsifying methods such as rotor/stator mixer, colloid mill and homogenizers, wherein the dispersed phase is received by mechanical influences such as shear forces etc. Such conventional emulsifying methods have the disadvantage of a high energy input leading to high temperature increase. A too high temperature increase may lead to a denaturation of proteins or other degradation in food or cosmetic products. In the cosmetic and pharma industry, a too high energy input is disadvantageous with respect to thermolabile or volatile (e.g. perfume) substances. Therefore, preferably, the apparatus according to the present invention is a membrane emulsification unit respectively the water-in-oil/fat emulsion is achieved by membrane emulsification process.

Preferably, the emulsion-based fat powder is produced by spray chilling an atomized liquid spray of the received water-in-oil/fat emulsion, in order to solidify the received water-in-oil/fat emulsion into particles.

Within the meaning of the present invention, spray chilling is the process of solidifying an atomized liquid spray into particles. However, the production of the emulsion-based fat powder is not limited to spray chilling and may, alternatively, be performed by supercritical melt micronisation (WO 2010/069752 A1) or by a phase inversion process (EP 0 293 980).

According to a spray chilling process, a water-in-oil/fat emulsion in liquid form comprising a dispersible phase, and a continuous phase, in particular in the form of high melting fat resp. wax, is sprayed by means of an atomizer or spraying nozzle into a chilled gas phase. As a consequence, the fat respectively wax of the continuous phase crystallizes instantly and surrounds the incorporated dispersed phase.

In the spray chilling process, a variety of atomization methods are available, including pressure nozzles, vibrating nozzles, and spinning disc atomizers. Microspheres are the most common encapsulation morphology prepared with this technique, with an active ingredient dispersed homogeneously throughout the encapsulating matrix. Common matrix materials include fats, waxes, lipids, and gelling hydrocolloids. The spray chilling techniques are generally high throughput, low cost, and simple to operate.

According to a further preferred method according the present inventtion, the emulsifying step is divided in two steps, wherein a pre-emulsion is produced by means of a homogenizer at first and the achieved pre-emulsion is transferred to a membrane emulsifier, thereby achieving a multiple, in particular a double, emulsion.

A further aspect of the present invention is related to an apparatus, in particular for performing the method according to the present invention. The apparatus comprises an emulsifying unit for receiving a water-in-oil/fat emulsion; a stabilizing unit for achieving an emulsion-based fat powder based on the water-in-oil/fat emulsion; and optionally, an incorporating unit for incorporating the achieved emulsion-based fat powder into a food product, in particular for kneading the achieved emulsion-based fat powder into a chewing gum composition.

Preferably, the emulsifying unit is a membrane emulsification unit.

More preferably, the membrane emulsification unit of the apparatus according to the present invention is designed in the form of a concentric cylinder system (i.e. based on a rotor-stator-principle). Such membrane emulsifier in the form of a concentric cylinder system may comprise two coaxially arranged outer and inner hollow cylinders, wherein the inner hollow cylinder is designed as a rotating unit (i.e. functioning as rotor) and wherein the cylinder surface is provided with a membrane (i.e. with a rotating membrane). Thereby, the inner cylinder may be designed to receive the dispersed phase and the membrane of the cylinder surface of inner cylinder may be designed to allow the passage of dispersed phase through the pores of the membrane into the outer hollow cylinder. Furthermore, the outer hollow cylinder (being fixed to the housing of the membrane emulsification unit and thus functioning as stator) may be designed to allow the passage of the continuous phase, such that, during operation of such membrane emulsification unit, the dispersed phase from the inner cylinder is dispersed into the continuous phase generating an emulsion, in particular a water-in-oil/fat emulsion according to the present invention.

Alternatively, the membrane emulsification unit in the form of a concentric cylinder system may be configured to have static membrane as discussed in detail later on.

Such membrane emulsification unit in the form of a concentric cylinder system has the advantage that the transmembrane pressure is additionally increased by the generated centrifugal force during operation. Furthermore, such membrane emulsification unit in the form of a concentric cylinder system is particularly suitable for the production of multiple, in particular double, emulsions. Furthermore, so called Taylor vortex can be observed during operation of such membrane emulsification unit and which may be correlated to a reduction of the droplet size of the dispersed phase.

According to a preferred embodiment of the present invention, the stabilizing unit is realized by a chilled spray tower.

A further aspect of the present invention is related to an emulsion-based fat powder, being essentially bubble-free, to manufacture a food, in particular a chewing gum composition, pharmaceutical or cosmetic product comprising an emulsion-based fat powder, particularly obtained by the method according to the present invention, and / or by an apparatus according to the present invention, the emulsion-based fat powder comprising a water-soluble dispersed phase within a high-melting wax matrix functioning as continuous phase, wherein the dispersible phase and / or continuous phase comprises at least one active ingredient, such that a controlled release and protection of active ingredients in the achieved foods, pharmaceutical respectively cosmetic products is allowed and improved.

Within the meaning of the present invention, the emulsion-based fat powder can be regarded as a "solidified" emulsion which is essentially free-flowing. The emulsion-based fat powder according to the present invention has the advantage that, principally, no usage of substances lowering the interfacial tension respectively emulsifiers is necessary. Nevertheless, the usage of emulsifiers is not excluded within the meaning of the present invention. The received fat respectively wax matrix realizes an efficient stabilisation of the incorporated hydrophilic components respectively a pre-emulsion in the dispersed phase. Hydrophobic components functioning as active ingredients may be stabilized within the fat respectively wax matrix.

Within the meaning of the present invention, the high-melting fat matrix respectively wax matrix is typically a fat which is in a solid state at room temperature, i.e. at about 20 degree Celsius.

Typically, the release of the active ingredients can be triggered by critical mechanical and / or thermal forces leading to rupture and / or melting of the encapsulating fat matrix and controlled tailored release.

A further aspect of the present invention is related to a food, pharmaceutical or cosmetic product, in particular a chewing-gum composition, wherein the emulsion-based fat powder according to the present invention is incorporated into the food, pharmaceutical or cosmetic product.

It has been surprisingly found that the food product, in particular chewing gum composition, with an emulsion-based fat powder according to the present invention leads to the advantage that release of aromas during consumption of chewing gum is drastically slowed and tailored release of contained flavours triggered by high shear forces during chewing of chewing gum within an extended time-frame of approximately 20 minutes enabling true long-lasting chewing gum is allowed.

Moreover, it has been surprisingly found that the cosmetic product, e.g. a skin cream, with an emulsion-based fat powder according to the present invention leads to the advantage that a heat induced release of cooling agent or UV-protection in cosmetic products allows the controlled and efficient release of heat-sensitive respectively light-sensitive material. The encapsulated cooling agent and / or UV protection agent will be stabilized in the cream and will not be lost during storage of application on the skin. Once the skin is exposed to heat, the active ingredients are released and will protect the skin from its exposure.

As a further advantage which has been surprisingly found, a cosmetic respectively food product comprising an emulsion-based fat powder according to the present invention solves the problem of the state of the art that colorants respectively dyes contained in food and cosmetic products are prone to disintegration during processing, storage and end-consumption. This is achieved in that the colorants respectively dyes are integrated into the microstructure of the emulsion-based fat powder, in particular the dispersed phase of the emulsion-based fat powder leading to protection from oxidation, light exposure and elevated temperatures. Colorants are released upon heating above a certain thermal or mechanical threshold energy allowing protection and increased shelf-stability of colorants and tailored and controlled release of colorants during preparation, consumption or application.

Preferably, the high-melting fat matrix or wax matrix comprises palm stearin, palm super-stearin, carnauba wax, bees wax, candelilla wax, ouricury wax, Bayberry wax, Castor wax, Esparto wax, Japan wax, Rice bran wax, Soy wax, Tallow Tree wax, shea butter, cocos fat, cacaobutter, et cetera, or any combinations thereof. Preferably, the melting point of the high-melting fat matrix is at least 36°C, more preferably between 50°C to 100°C.

Preferably, the dispersed phase of the emulsion-based fat powder according to the present invention further comprises water with active ingredients such as nicotine, vitamins, drugs, fragrances, dyes/ colorants, cooling agent, UV protection agents, or any combinations thereof, depending on the kind of usage.

According to a preferred development of the emulsion-based fat powder of the present invention, the basis of the powder may be a multiple emulsion, in particular a double emulsion received by a preferred development of the method according to the present invention. In other words, the emulsion-based fat powder may be an essentially "pure" water-in-oil/fat emulsion, or a multiple respectively double emulsion in the form of an oil/fat-in-water-in-oil/fat emulsion.

Preferably, the inner dispersed phase of the emulsion-based fat powder based on a multiple respectively double emulsion has a droplet size between 0.01µm to 50µm, more preferably between 0.1µm to 10µm, wherein the amount of the inner dispersed phase in relation to the outer dispersed phase is between 10wt% to 70wt%, more preferably 20wt% to 50wt%.

Preferably, the emulsion-based fat powder according to the present invention comprises substantially round particles with a, by choosing the spraying parameter controllable, diameter between 5µm to 600µm, preferably between 20µm and 150µm. Alternatively, the emulsion-based fat powder may have any other geometric shape such as e.g. an ellipsoid, flaky or an undefined shape.

Typically, the release of the flavour, sugar, acid and nicotine can be controlled through the particle size distribution, the emulsion and / or double emulsion droplet size distribution, the volume fraction of the dispersed phase and the shear respectively thermal stability of the matrix fat or wax. By blending different particle systems with varying particle properties (such as size, dispersed phase, distribution of dispersed phase and different matrix fat or wax), the flavour release can be extended and tailored.

A further aspect of the present invention is related to the use of an emulsion-based fat powder, comprising a water-soluble dispersed phase within a high melting wax matrix, within a chewing gum composition, particularly obtained by a method and / or by an apparatus according to the present invention, wherein the dispersed phase of the emulsion-based fat powder comprises water with nicotine as active ingredient, such that a chewing-gum composition is received with a controlled and drastically slowed release of nicotine of a nicotine chewing gum.

With regard to the usage of the emulsion-based fat powder, the present invention allows advantageously using flavour compounds more efficiently, as the full flavour load added to the powder is released during consumption of the chewing gum in opposite to current flavours (i.e. liquid respectively encapsulated) which remains in the chewing gum after consumption leading to drastically increased cost for chewing gum manufacturers as elevated amounts of flavours have to be incorporated to generate the desired effect.

### BRIEF DESCRIPTION OF THE DRAWINGS

A preferred exemplary embodiment of the subject matter of the invention is described below in conjunction with the attached drawings.
- Fig. 1: shows a schematic view of a preferred method according to the present invention;
- Fig. 2a: shows a schematic view of a first preferred embodiment of a membrane emulsification unit in the form of a concentric cylinder system with a rotating membrane, preferably as emulsifying unit within a preferred apparatus according to the present invention;
- Fig. 2b: shows a schematic view of second preferred embodiment of a membrane emulsification unit in the form of a concentric cylinder system with a static membrane, preferably as emulsifying unit within a preferred apparatus according to the present invention;
- Fig. 3a: shows a schematic view of a preferred, emulsion-based fat powder based on a "pure" water-in-oil/fat emulsion according to the present invention;
- Fig. 3b: shows a schematic view of a further preferred, emulsion-based fat powder on a double emulsion in the form of an oil/fat-in-water-in-oil/fat emulsion according to the present invention;
- Fig. 4a: shows a light microscopic picture of a "solidified" emulsion-based fat powder dispersed in oil (see Example 1);
- Fig. 4b: shows a light microscopic picture of a further "solidified" emulsion-based fat powder dispersed in oil (see Example 2);
- Fig. 5: shows a schematic view a preferred, emulsion-based fat powder based on a "pure" water-in-oil/fat emulsion according to the present invention incorporated into a food, pharmaceutical or cosmetic product, in particular a chewing gum composition, or a pharmaceutical product or a cosmetic product.

### DESCRIPTION

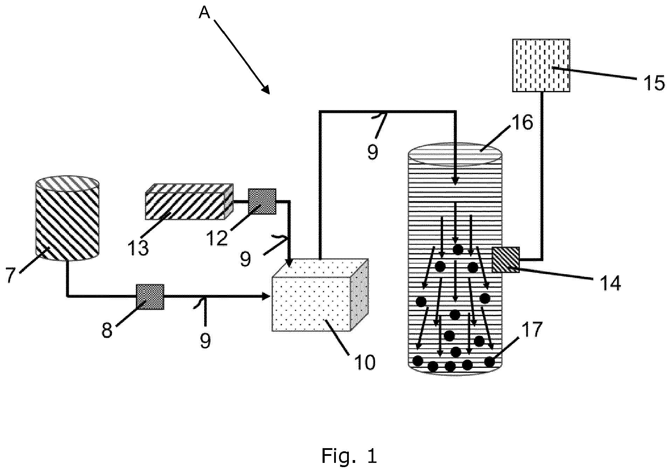

**Fig. 1** shows a schematic view of a preferred apparatus A and method according to the present invention for producing an emulsion-based and essentially bubble-free fat powder 17 to manufacture a food, pharmaceutical or cosmetic product.

As can be seen in Fig.1 the preferred apparatus A according to the present invention comprises an emulsifying unit in the form of a membrane emulsification unit 10 for receiving a water-in-oil/fat emulsion, a stabilizing unit in the form of a chilled spray tower 16 for achieving an emulsion-based fat powder 17 based on the water-in-oil/fat emulsion.

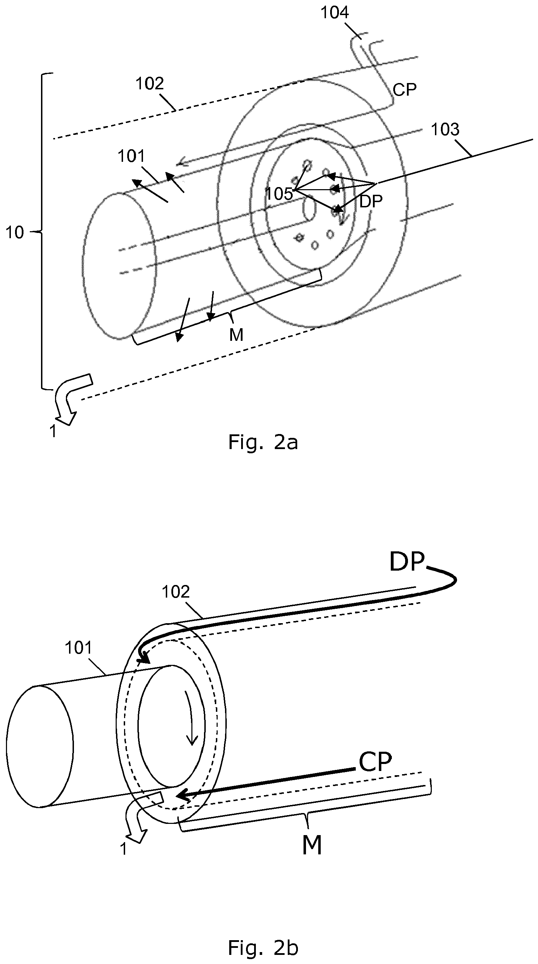

The preferred embodiment of the apparatus A further comprises a first, preferably double-jacked, tank 7 for storing and conditioning the continuous phase CP, e.g. in the form of a high-melting fat resp. wax matrix, wherein such first tank 7 is operatively connected here with a corresponding first pump 8 (preferably an eccentric screw pump) by means of a double-jacketed tubing 9 and wherein such first pump 8 pumps the continuous phase towards the membrane emulsification unit 10. Fig. 2 exemplifies the membrane emulsification unit 10 realized in the form of a concentric cylinder system. The continuous phase CP, e.g. in the form of a high-melting fat resp. wax matrix may be melted at a temperature between 20°C to 100°C, more preferably between 30°C to 80°C, most preferably between 50°C to 70°C during operation. The first pump 8 may be operated here at a through put between 5kg/h to 100kg/h, more preferably between 10kg/h to 80kg/h, most preferably between 15kg/h to 60kg/h at a temperature between 20°C to 100°C, more preferably between 30°C to 80°C, most preferably between 50°C to 70°C.

Moreover, Fig.1 shows a second, preferably double-jacked, tank 13 for storing and conditioning the dispersed phase, e.g. in the form of water-soluble substance in liquid form with addition of at least one active ingredient. Alternatively, second tank 13 may be used for the preparation of a pre-emulsion with respect to the preparation of a multiple, in particular a double, emulsion, together with a homogenizer (e.g. Polytron PT-MR 6000), as exemplified later on. The second tank 13 is operatively connected here with a corresponding second pump 12 (preferably an eccentric screw pump) by means of a double-jacked tubing 9, wherein such second pump 12 pumps the dispersed phase towards the membrane emulsification unit 10.

According to a further preferred method according the present inventtion, the emulsifying step is divided in two steps, wherein a pre-emulsion is produced e.g. by means of a homogenizer within the second tank 13 at first, and the achieved pre-emulsion is transferred to a membrane emulsification unit 10, thereby achieving a multiple, in particular a double, emulsion. In case of using the second tank 13 for the preparation of a pre-emulsion in order to receive a multiple, in particular a double, emulsion, the temperature within the second tank 13 may be set between 10°C to 100°C, more preferably between 20°C to 50°C, most preferably between 25°C to 35°C during operation. The second pump 12 may be operated here at a through put between 1kg/h to 80kg/h, more preferably between 1kg/h to 50kg/h, most preferably between 1kg/h to 30kg/h at a temperature between 20°C to 100°C, more preferably between 30°C to 80°C, most preferably between 50°C to 70°C. During emulsification of the pre-emulsion into the continuous phase by means of a membrane emulsification unit 10 (in particular realized in the form of a concentric cylinder system), the rotational speed may be set here between 100rpm to 10'000rpm, more preferably between 1'000rpm to 8'000rpm, most preferably between 2'000rpm to 7'500rpm and a flushing tank (not shown here) interconnected between the second pump 12 and the second tank 13 (see Fig.1) for the dispersed phase may be set here at a pressure between 1bar to 30bar, more preferably between 2bar to 20bar, most preferably between 3bar to 16bar.

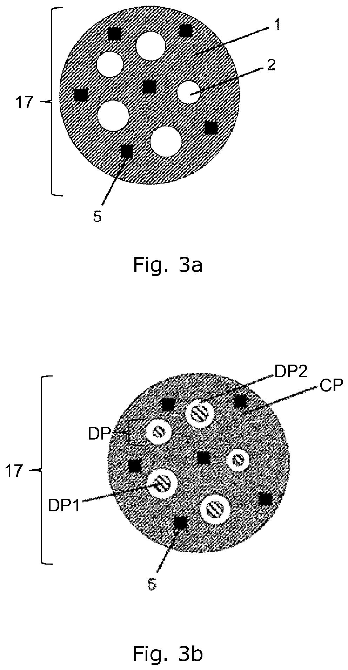

Within the meaning of the present invention, the dispersed phase of the pre-emulsion, preferably having a droplet size between 0.001µm to 50µm, more preferably between 0.01µm to 5µm, can be regarded as the inner dispersed phase of the resulting emulsion-based fat powder 17, whereas the, typically water-soluble, continuous phase of the pre-emulsion can be regarded as the outer dispersed of the resulting emulsion-based fat powder 17 according to Fig.3b. Preferably, such continuous phase of the pre-emulsion may comprise added thickeners such as starch, e.g. mais starch or corn starch, agar-agar, sodium alginate, xanthan, carrageenan, gelatin, gum Arabic, pectin, fiber material, et cetera, or any combinations thereof, in order to increase the viscosity. Preferably, the dispersed phase respectively continuous phase of the pre-emulsion may comprise as active ingredient lipophilic or hydrophilic liquid flavour such as peppermint, spearmint, watermelon, wintergreen, strawberry, raspberry, cherry, et cetera, or any combinations thereof. More preferably, the dispersed phase respectively continuous phase of the pre-emulsion may further comprise water with active ingredients such as nicotine, vitamins, colorants, et cetera, or any combinations thereof. Most preferably, the active ingredients of the dispersed phase of the pre-emulsion may be different from the active ingredients of the continuous phase of the pre-emulsion.

The received water-in-oil/fat emulsion may be stabilized by means of a chilled spray tower 16, as illustrated in Fig.1, in order to achieve an emulsion-based fat powder 17. The chilled spray tower 16 is preferably operatively connected with a temperature sensor 14 for measuring the temperature within the chilled spray tower 16 and a control unit 15 for controlling temperature and atomization pressure of the chilled spray tower 16. The atomization pressure is related respectively used for controlling the particle size of emulsion-based fat powder 17.

During the spray chilling process within the chilled spray tower 16, the liquid water-in-oil/fat emulsion (or multiple emulsion) received from the membrane emulsification unit 10 by means of a double-jacketed tubing 9 is sprayed by means of an atomizer (or spraying nozzle) into a chilled gas phase within the chilled spray tower 16. As a consequence, the fat respectively wax of the continuous phase cristallizes instantly and surrounds the incurporated dispersed phase achieving an emulsion-based fat powder 17.

During operation of the chilled spray tower 16 to receive an emulsion-based powder based on an multiple, in particular double, emulsion, the temperature of the chilled gas phase (e.g. based on liquid nitrogen) within the chilled spray tower 16 may be set here between -50°C to 0°C, more preferably -40°C to -10°C, most preferably -30°C to -20°C and the atomization pressure of the atomizer may be set here between 1bar to lObar, more preferably 2bar to 8bar, most preferably 3bar to 5bar.

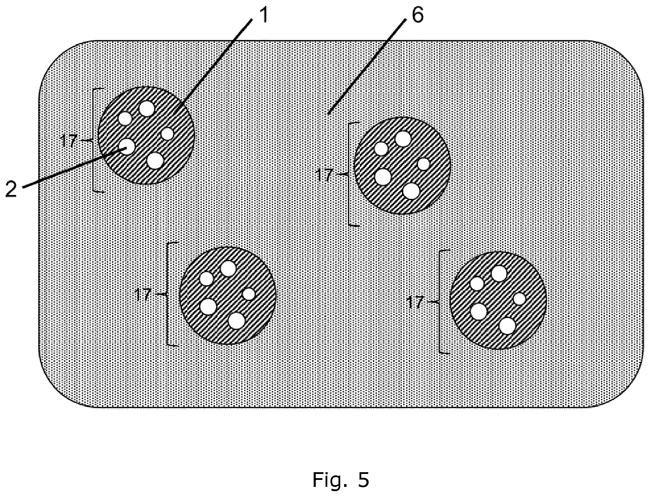

Moreover, the apparatus A may further comprise an incorporating unit (not shown here) for incorporating the achieved emulsion-based fat powder 17 into a food product, in particular a chewing gum composition (see Fig.5), wherein the incorporating unit may be realized by a kneading machine.

**Fig. 2a** shows a schematic view of a first preferred embodiment of a membrane emulsification unit 10 in the form of a concentric cylinder system with a rotating membrane M, preferably as emulsifying unit within a preferred apparatus A according to the present invention. As can be seen in Fig. 2, such membrane emulsification unit 10 in the form of a concentric cylinder system may comprise two coaxially arranged outer hollow cylinder 102 and inner hollow cylinder 101, wherein the inner hollow cylinder 101 is designed as a rotating unit (as indicated by an arrow) and wherein the cylinder surface is provided with a membrane M.

Thereby, the inner hollow cylinder 101 may be designed to receive the dispersed phase coming from the second pump 12 by means of a first input line 103 and a plurality of through-holes 105 here, and the membrane M of the cylinder surface of inner hollow cylinder 101 may be designed to allow the passage of dispersed phase through the pores of the membrane M (indicated by arrow) into the outer hollow cylinder 102 (indicated here by dashed lines). Furthermore, the outer hollow cylinder 102 may be designed to allow the passage of the continuous phase CP by means of a second input line 104 here, such that, during operation of such membrane emulsification unit 10, the dispersed phase DP from the inner hollow cylinder 101 is dispersed into the continuous phase generating an emulsion, in particular a water-in-oil/fat emulsion 1, according to the present invention which may be stabilised by means of a chilled spray tower (not shown here, see Fig.1) afterwards.

**Fig. 2b** shows a schematic view of second preferred embodiment of a membrane emulsification unit 10 in the form of a concentric cylinder system with an outer static membrane M, preferably as emulsifying unit within a preferred apparatus A according to the present invention. The second preferred embodiment of a membrane emulsification unit 10 comprises two coaxially arranged outer hollow cylinder 102 and inner cylinder 101, wherein the inner cylinder 101 is designed as a rotating unit (as indicated by an arrow). The outer static membrane M (illustrated here by dashed lines) is arranged between the outer cylinder 102 and the inner cylinder 101. This second preferred embodiment of a membrane emulsification unit 10 may be designed to allow the passage of the continuous phase CP between the inner cylinder 101 and the static membrane M, whereas the membrane emulsification unit 10 may be designed to allow the passage of the dispersed phase DP between the outer cylinder 102 and the static membrane M such that, during operation, the dispersed phase DP is dispersed into the continuous phase CP generating an emulsion, in particular a water-in-oil/fat emulsion 1. Such second preferred embodiment of a membrane emulsification unit 10 has the advantage that a static membrane is more suitable for scaling up compared to the first preferred embodiment as shown in Fig.2a. Furthermore, the dynamic cylinder increases the shear stress at the inner membrane wall, resulting in efficient detachment of droplets from the inner membrane wall. As a further advantage of the second preferred embodiment, the temperature can be controlled by the flushing of the hollow cylinder 101.

Such membrane emulsification unit 10 in the form of a concentric cylinder system as shown in Fig.2a respectively Fig.2b is particularly suitable for the production of multiple, in particular double, emulsions.

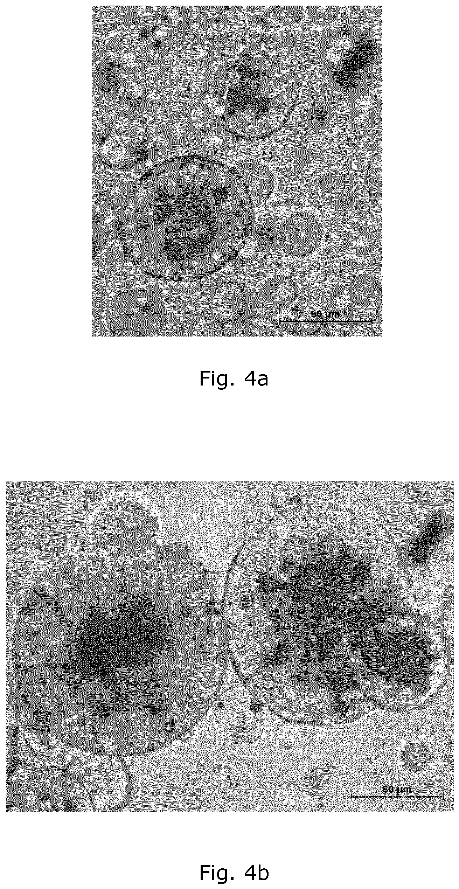

The method and related apparatus according to the present invention (as generally described with respect to Fig.1) is further illustrated by the following non-limiting Example 1 with respect to the production an emulsion-based powder 17 based on a multiple, in particular double, emulsion achieving an emulsion-based fat powder 17 (see Table 1, diagram ("Powder 1") and Fig.4a):

**Table 1**

| **Equipment / Material** | **Parameter** | **Value** |
|---|---|---|
| First double-jacketed, tank 7 (for storing and conditioning the continuous phase CP / high-melting fat): | Temperature | Preferably about 50°C to 80°C, more preferably about 55°C to 65°C |
| (1) Melt about 10kg of "Palm super-stearin"; | | |
| (2) Mix together with 0wt% to 10wt%, more preferably with 2wt% to 5wt% polyglycerin-polyricinoleat (PGPR) as emulsifier; | | |
| (3) Stir to ensure homogeneity | | |
| First pump 8 (eccentric screw pump) | Through put | **Preferably about 30kg/h to 40kg/h, more preferably about 34kg/h to 36kg/h** |
| Double-jacketed tubing 9 (between first pump 8 and membrane emulsification unit 10) | Temperature | Preferably about 50°C to 80°C, more preferably about 55°C to 65°C |
| Second tank 13 (for the preparation of a pre-emulsion with 50wt% of dispersed phase) as follows: | Temperature | Preferably about 20°C to 65°C, more preferably about 25°C to 30°C |
| (1) Mix about 300g tap water preferably with 0wt% to 10wt%, more preferably with 2wt% to 5wt% Polysorbate 80 (i.e. Tween80 resp. E433) as emulsifier; | | |
| (2) Add about 300g oil-based resp. lipophilic peppermint (or other) flavour slowly during stirring; | | |
| (3) Stir resp. disperse using a homogenizer (e.g. Polytron PT-MR 6000) | Rotational speed / time | Preferably about 1'000rpm to 10'000rpm, more preferably about 5'000rpm to 8'000rpm for about 20min |
| Second pump 12 (eccentric screw pump) | Through put | **Preferably about 15kg/h to 25kg/h, more preferably about 18kg/h to 22kg/h** (in order to receive an **amount of 34wt% of dispersed phase)** |
| Double-jacketed tubing 9 (between second pump 12 and membrane emulsification unit 10) | Temperature | Preferably about 50°C to 80°C, more preferably about 55°C to 65°C |
| Flushing tank (at the second tank 13) | Pressure | About 6bar |
| Membrane emulsification unit 10 (according to the second preferred embodiment of Fig.2b); | Rotational speed (of inner solid cylinder); | Preferably about 100rpm to 10'000rpm, more preferably about 1'000rpm to 8'000rpm (for receiving a droplet size of the dispersed emulsion between 2µm to 8µm to be atomized in the spray chilling tower); |
| | | 50µm |
| Outer membrane M | Pore size | |
| Chilled spray tower 16 | Temperature | About -20°C (chilled gas phase based on liquid nitrogen); |
| | Atomization pressure (at spray nozzle) | **Preferably about 1bar to 5bar, more preferably about 2bar to 4bar** (for receiving a particle size of the received emulsion -based fat powder of **about 20µm to 130µm, in particular 45µm to 65µm)** |

The method and related apparatus according to the present invention (as generally described with respect to Fig.1) is further illustrated by the following non-limiting Example 2 with respect to the production an emulsion-based powder 17 based on a multiple, in particular double, emulsion (see Table 2, diagram ("Powder 2") and Fig.4b):

**Table 2**

| **Equipment / Material** | **Parameter** | **Value** |
|---|---|---|
| First double-jacketed, tank 7 (for storing and conditioning the continuous phase CP / high-melting fat): | Temperature | Preferably about 50°C to 80°C, more preferably about 55°C to 65°C |
| (1) Melt about 10kg of "Palm super-stearin" | | |
| (2) Mix together with 0wt% to 10wt%, more preferably with 2wt% to 5wt% polyglycerin-polyricinoleat (PGPR) as emulsifier | | |
| (3) Stir to ensure homogeneity | | |
| First pump 8 (eccentric screw pump) | Through put | **Preferably about 14,5kg/h to 19,5kg/h, more pre-ferably about 16,5kg/h to 17,5kg/h** |
| Double-jacketed tubing 9 (between first pump 8 and membrane emulsification unit 10) | Temperature | Preferably about 50°C to 80°C, more preferably about 55°C to 65°C |
| Second tank 13 (for the preparation of a pre-emulsion) as follows: | Temperature | Preferably about 20°C to 65°C, more preferably about 25°C to 30°C |
| (1) Mix about 300g tap water with owt% to 10wt%, more preferably with 2wt% to 5wt% Polysorbate 80 (i.e. Tween80 resp. E433) as emulsifier; | | |
| (2) Add about 300g oil-based resp. lipophilic peppermint (or other) flavour slowly during stirring; | Rotational speed / time | Preferably about |
| (3) Stir resp. disperse using a homogenizer (e.g. Polytron PT-MR 6000) | | 1'000rpm to 10'000rpm, more preferably about 5'000rpm to 8'000rpm for about 20min |
| Second pump 12 (eccentric screw pump) | | **Preferably about 3kg/h to 5kg/h, more preferably about 3,4kg/h to 4,6kg/h** (in order to receive an **amount of 20wt% of dispersed phase**) |
| Double-jacketed tubing 9 (between second pump 12 and membrane emulsification unit 10) | Temperature | Preferably about 50°C to 80°C, more preferably about 55°C to 65°C |
| Flushing tank (at the second tank 13) | Pressure | About 6bar |
| Membrane emulsification unit 10 (according to the second preferred embodiment of Fig.2b); | Rotational speed (of inner solid cylinder); | Preferably about 100rpm to 10'000rpm, more preferably about 1'000rpm to 8'000rpm (for receiving a droplet size of the dispersed emulsion between 2µm to 8µm to be atomized in the spray chilling tower); |
| Outer membrane M | Pore size | 50µm |
| Chilled spray tower 16 | Temperature; | About -20°C (chilled gas phase based on liquid nitrogen); |
| | Atomization pressure (at spray nozzle) | **Preferably about 2bar to 8bar, morepreferably about 3,5bar to 6,5bar** (for receiving a particle size of the received emulsion-based fat powder of **about 20µm to 70µm, in particular 40µm to 45µm)** |

As can learnt from the comparison of the Examples 1 and 2 that the amount of dispersed phase DP in the continuous phase CP can be controlled by the through puts of pump 8 resp. pump 12. Furthermore, the particle size of received emulsion-based fat powder can be controlled by the atomization pressure of the spray nozzle of the chilled spray tower 16.

The following diagram shows respectively compares the particle size distribution of the achieved emulsion-based fat powders 17 from Example 1 ("Powder 1") respectively Example 2 ("Powder 2"):

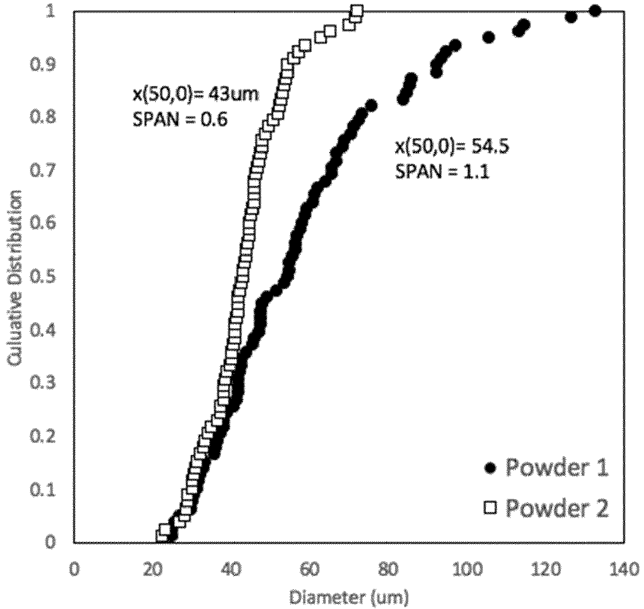

As can be seen in this diagram, the mean particle size of the emulsion-based fat powder of Example 1 ("Powder 1") is about 43µm, whereas the mean particle size of the emulsion-based fat powder of Example 2 ("Powder 2") is about 54,5µm.

**Fig.3a** shows a schematic view of a preferred, emulsion-based fat powder 17 based on a "pure" water-in-oil/fat emulsion according to the present invention.

**Fig.3b** shows a schematic view of a further preferred, emulsion-based fat powder 17 on a double emulsion e.g. in the form of an oil/fat-in-water-in-oil/fat emulsion according to the present invention (e.g. obtained by the method and apparatus according to Example 1), wherein a dispersed phase DP is dispersed within a continuous phase CP, in particular in the form of high melting fat resp. wax. The dispersed phase DP comprises an inner dispersed phase DP1 and an outer dispersed phase DP2, wherein the amount of the inner dispersed phase DP1 in relation to the outer dispersed phase DP2 is preferably between 10wt% to 70wt%, more preferably between 20wt% to 50wt%.

Furthermore, the double emulsion may comprise within the continuous phase CP suspended or dissolved particles 5, e.g. being acids or sweeteners such as essentially fat-soluble Saccharin, Aspartame, Acesulfame potassium (Ace-K), Sucralose, Neotame, Advantame, Steviol glycosides et cetera, or any combinations thereof, as shown in Fig.3b.

**Fig.4a** shows a light microscopic picture of a "solidified" emulsion-based fat powder received by Example 1, dispersed in oil (see Example 1).

**Fig.4b** shows a light microscopic picture of a "solidified" emulsion-based fat powder received by Example 1, dispersed in oil (see Example 1).

**Fig.5** shows a schematic view a preferred, emulsion-based fat powder 17 based on a "pure" water-in-oil/fat emulsion comprising a dispersed phase DP and a continuous phase CP according to the present invention incorporated into a food, pharmaceutical or cosmetic product, in particular a chewing gum composition, or a pharmaceutical product or a cosmetic product. In case of a chewing gum composition, the particles of the emulsion-based fat powder are incorporated into a gum base 6.

### LIST OF REFERENCE NUMERALS

- 1: Water-in-oil/fat emulsion in liquid form
- 5: Suspended or dissolved particle
- 6: Gum base
- 7: First tank (double-jacked for storing and conditioning the continuous phase)
- 8: First pump (for pumping the continuous phase)
- 9: Double-jacketed tubing
- 10: Membrane emulsification unit
101 Inner hollow cylinder
102 Outer hollow cylinder
103 First input line (for the dispersed phase)
104 Second input line (for the continuous phase)
105 Through-holes (for the dispersed phase)
- 12: Second pump (for pumping the dispersed phase)
- 13: Second tank (for storing and conditioning the dispersed phase)
- 14: Temperature sensor (for measuring the temperature within the chilled spray tower)
- 15: Control unit (for controlling temperature and atomization pressure of the chilled spray tower)
- 16: Chilled spray tower
- 17: Emulsion-based fat powder
- A: Apparatus
- C: Chewing gum composition
- CP: Continuous Phase
- DP: Dispersed Phase
- M: Membrane

## Claims

1. Method for producing an emulsion-based and essentially bubble-free fat powder (17) to manufacture a food, pharmaceutical or cosmetic product, in particular a chewing gum composition, comprising the method steps of:
a) providing a dispersible phase (DP) and a continuous phase (CP), in particular in the form of high melting fat resp. wax in liquid form; the dispersible phase (DP) and / or continuous phase (CP) comprising at least one active ingredient;
b) emulsifying a dispersible, water-soluble phase (DP) within a high melting fat resp. wax matrix functioning as continuous phase (CP) in order to receive a water-in-oil/fat emulsion;
c) stabilizing the received water-in-oil/fat emulsion, achieving an emulsion-based fat powder (17).

2. Method according to claim 1,
**characterized in that**
method step b) is performed by a process based on a rotor-stator-principle, in particular a membrane emulsification process.

3. Method according to claim 1 or 2,
**characterized in that**
method step c) is performed by spray chilling an atomized liquid spray in order to solidify the received water-in-oil/fat emulsion into particles.

4. Method according to claim 1 to 3,
**characterized in that**
method step b) is divided in two steps, wherein a pre-emulsion is produced by means of a homogenizer at first and the achieved pre-emulsion is transferred to a membrane emulsifying unit (10), thereby achieving a multiple, in particular a double, emulsion.

5. Apparatus (A), in particular for performing the method according to claims 1 to 4, comprising:
- an emulsifying unit (10) for receiving a water-in-oil/fat emulsion;
- a stabilizing unit for achieving an emulsion-based fat powder (17) based on the water-in-oil/fat emulsion;
- optionally an incorporating unit for incorporating the achieved emulsion-based fat powder (17) into a food product, in particular a chewing gum composition (C).

6. Apparatus (A) according to claim 5,
**characterized in that**
the emulsifying unit is a process unit based on a rotor-stator-principle, in particular a membrane emulsification unit (10).

7. Apparatus (a) according to claim 5 or 6,
**characterized in that**
the stabilizing unit is a chilled spray tower (16).

8. Emulsion-based fat powder (17), being essentially bubble-free, to manufacture a food, pharmaceutical or cosmetic product, in particular for a chewing gum composition, particularly obtained by the method according to claims 1 to 4 and / or by an apparatus according to claims 5 to 7, the emulsion-based fat powder comprising a water-soluble dispersed phase within a high melting wax matrix functioning as continuous phase (CP), wherein the dispersible phase (DP) and / or continuous phase (CP) comprises at least one active ingredient, such that a controlled release and protection of active ingredients in the achieved foods, pharmaceutical respectively cosmetic products is allowed and improved.

9. Emulsion-based fat powder (17), in particular for a chewing gum composition, according to claim 8,
**characterized in that**
the emulsion-based fat powder comprises substantially round particles with a, by choosing the spraying parameter controllable, diameter between 5µm to 600µm, preferably between 20µm and 150µm.

10. Emulsion-based fat powder (17), in particular for a chewing gum composition, according to claims 8 or 9,
**characterized in that**
the amount of the dispersed phase (DP) in relation to the continuous phase (CP) of the emulsion-based fat powder (17) is between 5wt% to 90wt%, preferably 10wt% to 50wt%.

11. Emulsion-based fat powder (17), in particular for a chewing gum composition, according one of claims 8 to 10,
**characterized in that**
the droplet size of the dispersed phase (DP) of the emulsion-based fat powder (17) is between 1µm to 50µm, preferably between 3µm to 10µm.

12. Emulsion-based fat powder (17), in particular for a chewing gum composition, according to one of claims 8 to 11,
**characterized in that**
the dispersed phase (DP) of the emulsion-based fat powder (17) comprises as active ingredient lipophilic or hydrophilic liquid flavour such as peppermint, spearmint, watermelon, wintergreen, strawberry, raspberry, cherry, et cetera, or any combinations thereof.

13. Emulsion-based fat powder (17), in particular for a chewing gum composition, according to claim 12,
**characterized in that**
the dispersed phase (DP) of the emulsion-based fat powder (17) further comprises water with active ingredients such as nicotine, vitamins, colorants, et cetera, or any combinations thereof.

14. Emulsion-based fat powder (17), in particular for a chewing gum composition, according to one of claims 8 to 13,
**characterized in that**
the emulsion-based fat powder (17) is based on a multiple emulsion, in particular a double emulsion, the dispersed phase (DP) comprising an inner dispersed phase (DP1) and an outer dispersed phase (DP2), wherein the amount of the inner dispersed phase (DP1) in relation to the outer dispersed phase (DP2) is between 10wt% to 70wt%, more preferably between 20wt% to 50wt%.

15. Emulsion-based fat powder (17), in particular for a chewing gum composition, according to claim 14,
**characterized in that**
the droplet size of the inner dispersed phase (DP1) is between 0.01µm to 50µm, preferably between 0.1µm to 10µm.

16. Emulsion-based fat powder (17), in particular for a chewing gum composition, according to one of claims 8 to 15,
**characterized in that**
the continuous phase (CP), in particular high-melting fat matrix or wax matrix, of the emulsion-based fat powder (17) comprises palm stearing, palm super-stearin, carnauba wax, bees wax, candelilla wax, ouricury wax, Bayberry wax, Castor wax, Esparto wax, Japan wax, Rice bran wax, Soy wax, Tallow Tree wax, shea butter, cocos fat, cacaobutter, et cetera, or any combinations thereof.

17. Emulsion-based fat powder (17), in particular for a chewing gum composition, according to one of claims 8 to 16,
**characterized in that**
the continuous phase (CP), in particular high-melting fat matrix or wax matrix, and / or the dispersed phase (DP) comprises suspended or dissolved particles (5) therein, being acids or sweeteners such as essentially fat-soluble Saccharin, Aspartame, Acesulfame potassium (Ace-K), Sucralose, Neotame, Advantame, Steviol glycosides et cetera, or any combinations thereof.

18. Food product, in particular a chewing-gum composition, wherein the emulsion-based fat powder (17) according to one of claims 8 to 17 is incorporated into the food product.

19. Food product, in particular a chewing-gum composition according to claim 18,
**characterized in that**
the amount of emulsion-based fat powder (17) within the chewing gum composition is between 1wt% to 30wt%, more preferably 5wt% to 15wt%.

20. Pharmaceutical product comprising the emulsion-based fat powder, wherein the emulsion-based fat powder (17) according to one of claims 8 to 17 is incorporated into the food product.

21. Pharmaceutical product according to claim 20,
**characterized in that**
the dispersed phase (DP) of the emulsion-based fat powder (17) comprises water with active ingredients such as nicotine, vitamins, drugs, colorants, et cetera, or any combinations thereof.

22. Use of an emulsion-based fat powder (17) according to one of claims 8 to 17, comprising a water-soluble dispersed phase within a high melting wax matrix functioning as continuous phase, within a chewing gum composition.

23. Use of an emulsion-based fat powder (17) according to claim 22,
**characterized in that**
the dispersed phase (DP) of the emulsion-based fat powder (17) comprises water with nicotine as active ingredient, such that a chewing-gum composition is received with a controlled and drastically slowed release of nicotine of a nicotine chewing gum.
